# EUROPÄISCHE PATENTSCHRIFT

(11) **EP 3 372 704 B1**
(45) Veröffentlichungstag und Bekanntmachung des Hinweises auf die Patenterteilung: **13.02.2019**
(21) Anmeldenummer: 17160190.9
(22) Anmeldetag: 09.03.2017
(51) Int. Cl.: C21D 6/00, C21D 1/18, C21D 1/25, C22C 38/60, C22C 38/00, C22C 38/18, C22C 38/04, C22C 38/40, C22C 38/44, F16B 25/00, F16B 35/00, F16B 43/00, F16B 39/00, B60B 3/00, C21D 9/00, F16B 39/282

(54) **KOMBI-SCHRAUBE UND VERFAHREN ZUR HERSTELLUNG EINER KOMBI-SCHRAUBE**
COMBINATION SCREW AND METHOD FOR PRODUCING A COMBINATION SCREW
VIS COMBINÉE ET SON PROCÉDÉ DE FABRICATION

(43) Veröffentlichungstag der Anmeldung: 12.09.2018
(73) Patentinhaber: Nedschroef Fraulautern GmbH, 66740 Saarlouis (DE)
(72) Erfinder: Egele, Jean Joseph, 66386 St. Ingbert (DE)
(74) Vertreter: Patentanwälte Dörner & Kötter PartG mbB

(56) Entgegenhaltungen:
- EP-A1- 1 174 283
- DE-U1-202004 006 108
- US-A- 3 037 221
- US-A1- 2012 263 558
- Astm: "ASTM F 568M - 98 METRIC Standard Specification for Carbon and Alloy Steel Externally Threaded Metric Fasteners", , 31. Dezember 1998 (1998-12-31), XP055375976, Gefunden im Internet: URL:http://itc.co.ir/wp-content/uploads/20 15/01/F-568M---98.pdf [gefunden am 2017-05-24]

## Beschreibung

Die Erfindung betrifft eine Kombi-Schraube, umfassend eine Schraube und eine unverlierbar an dieser gehaltene Scheibe, wobei die Schraube aus einer Stahllegierung 38B2 gemäß DIN EN 10263 und die Scheibe aus einer Stahllegierung C22 gemäß DIN EN 10083 hergestellt ist. Die Erfindung betrifft weiterhin ein Verfahren zur Herstellung einer solchen Kombischraube.

Kombischrauben finden in großen Stückzahlen Verwendung und sind in unterschiedlichen Ausführungen bekannt. Sie umfassen eine Schraube, auf der eine Scheibe unverlierbar gehalten ist. Hierzu wird auf einen Schraubenrohling eine Scheibe aufgesteckt und nachträglich wird in den Schraubenschaft meist durch Gewindewalzen ein Gewinde eingebracht, wodurch die Schraube unverlierbar oberhalb des Gewindes auf dem Schraubenschaft gehalten ist. Wesentlich bei Kombischrauben ist, dass Schraube und Scheibe eine unterschiedliche Härte aufweisen müssen. Im Besonderen ist dies der Fall, wenn sowohl die Schraubenunterkopffläche, als auch die Scheibe mit Rippen versehen sind, welche ein Lösen der Schraube im Betrieb, bspw. durch Vibrationen oder Temperaturschwankungen, verhindern sollen. Um ein Einprägen der Rippen der Schraube in die Scheibe zu ermöglichen, ist es erforderlich, dass die Scheibe weicher ist, als die Schraube. Hierbei wird eine Differenz von wenigstens 40 HV, teilweise sogar von 50 HV der Scheibenhärte zur Schraubenhärte gefordert.

Schraube und Scheibe einer Kombischraube bestehen regelmäßig aus Stahllegierungen deren Härten durch eine jeweils geeignete Wärmebehandlung erreicht werden. Für den Einsatz im Automobilbereich wird die Schraube dabei aus einer Stahllegierung 38B2 gemäß DIN EN 10263 und die Scheibe aus einer Stahllegierung C22 gemäß DIN EN 10083 hergestellt. Da es sich hierbei um unterschiedliche Legierungen und Vormaterial handelt, müssen beide Werkstoffe bei spezifischen Temperaturen wärmebehandelt werden. Dies führt dazu, dass Schraubenrohlinge und Scheiben separat wärmebehandelt werden und das Gewinde nach dem Aufbringen der Scheibe auf einem gehärteten Schraubenrohling gewalzt werden muss. Dies wiederum führt zu einem kostenintensiven Walzprozess der durch hohen Werkzeugverschleiß charakterisiert ist.

### Zum Stand der Technik gehören

EP 1174283 und US 2012263558, die Kombischrauben für ein Fahrzeugrad offenbaren.

Hier will die Erfindung Abhilfe schaffen. Der vorliegenden Erfindung liegt die Aufgabe zugrunde, eine Kombischraube bereitzustellen, die bei ihrer Herstellung in einem gemeinsamen Härteprozess von Schraube und Scheibe eine vorausplanbare, gegenüber der Schraube verschiedene, insbesondere geringere Härte der Scheibe ermöglicht. Erfindungsgemäß wird diese Aufgabe dadurch gelöst, dass der Scheibenwerkstoff einen Kohlenstoffgehalt von 0,18 % bis 0,23 %, einen Mangangehalt von 0,5 % bis 0,7 % und einen Chromgehalt von 0,1 % bis 0,4 % aufweist.
Mit der Erfindung ist eine Kombischraube bereitgestellt, die bei ihrer Herstellung in einem gemeinsamen Härteprozess von Schraube und Scheibe eine vorausplanbare, gegenüber der Schraube verschiedene, insbesondere geringere Härte der Scheibe ermöglicht. Grundgedanke der vorliegenden Erfindung ist es, unter Beibehaltung der marktüblichen regelmäßig verwendeten Legierungen 3B2 und C22 unter Einschränkung der Toleranz des Scheibenwerkstoffs die mechanischen Eigenschaften der Scheibe, insbesondere deren Härte vorausplanbar zu machen, um so einen gemeinsamen Vergütungsprozess von Schraube und Scheibe zu ermöglichen, bei dem eine gegenüber der Schraube verschiedene, insbesondere geringere Härte der Scheibe zuverlässig erzielbar ist. Hierdurch ist ein Gewindewalzen des Schraubenrohlings nach Aufbringen der Scheibe vor dem Vergüten ermöglicht, wodurch der Walzprozess der in Massenproduktion hergestellten Kombischrauben kostenreduziert insbesondere unter geringerem Werkzeugverschleiß durchführbar ist.
Für eine Schraube der Güteklasse 10.9 nach DIN 898 Teil 1 wird üblicherweise der Werkstoff 38B3 eingesetzt. Dieser wird nach Austenitisierung bei 450°C angelassen um die mechanischen Eigenschaften zu erhalten. Ein für die Scheibe geeigneter und regelmäßig eingesetzter Scheibenwerkstoff ist die Legierung C22 gemäß DIN EN 10083. Bei diesem kann jedoch aufgrund der großen Bandbreiten der Legierungsbestandteile weder die Härtbarkeit an und für sich, noch die reale Härte zuverlässig vorausgesagt werden.

Gemäß DIN EN 10083 umfasst die Legierung C22 folgende Zusammensetzung:

| Legierungselemente | Wert-von (in Massen-%) | Wert-bis (in Massen-%) |
|---|---|---|
| Kohlenstoffe (C) | 0,17 | 0,24 |
| Silizium (Si) | | 0,40 |
| Mangan (Mn) | 0,40 | 0,70 |
| Phosphor (P) | | 0,045 |
| Schwefel (S) | | 0,2 |
| Chrom (Cr) | | 0,40 |
| Molybdän (Mo) | | 0,10 |
| Cr+Mo+Ni | | 0,63 |

Überraschend hat sich gezeigt, dass die Voraussagbarkeit der mechanischen Eigenschaften, insbesondere der Härte deutlich gesteigert werden kann, wenn die Toleranzbereiche der zulässigen Anteile von Kohlenstoff, Mangan und Chrom geeignet eingeschränkt werden. Es hat sich gezeigt, dass sich die Auswirkungen der Anteile dieser Elemente auf die sich ergebene Härte der Legierung im Wesentlichen linear zu deren Massenanteil verhalten, wobei jedoch ein Bereich gefunden wurde, in dem die erreichte Härte einen sprunghaften Anstieg erfährt. Erfindungsgemäß wurden die Massenprozentanteile von Kohlenstoff, Mangan und Chrom derart gewählt, dass diese oberhalb des jeweils gefundenen Bereichs des sprunghaften Verhaltens der Legierung in Bezug auf ihre Härte liegt.

In Weiterbildung der Erfindung weist der Scheibenwerkstoff einen Kohlenstoffgehalt von 0,19 % bis 0,23 %, einen Mangangehalt von 0,55 % bis 0,65 % und einen Chromgehalt von 0,15 % bis 0,25 % auf. Es hat sich gezeigt, dass hierdurch eine gute Voraussagbarkeit der Härte der Scheibe, bei gleichzeitig homogenem Verhalten über die Scheibenfläche erzielbar ist. Bevorzugt weist der Scheibenwerkstoff einen Kohlenstoff-Äquivalent-Gehalt (Carbon Equivalent Value - CEV) von 0,33 % bis 0,39 %, bevorzugt von 0,35 % bis 0,37 % auf.

In Ausgestaltung der Erfindung ist die Unterkopffläche der Schraube zumindest bereichsweise mit Rippen versehen, wobei alternativ oder auch zusätzlich zumindest auf einer Seite zumindest bereichsweise mit Rippen versehen sein kann.

Der vorliegenden Erfindung liegt weiterhin die Aufgabe zugrunde, ein Verfahren zur Herstellung einer solchen Kombischraube bereitzustellen, das kostenreduziert durchführbar ist. Gemäß der Erfindung wird diese Aufgabe durch ein Verfahren gelöst, bei dem zunächst ein Schraubenrohling und eine Scheibe hergestellt werden, die Scheibe auf den Schraubenrohling gesteckt wird und nachfolgend in die Schraube ein Gewinde eingebracht wird, wonach die so gebildete Kombischraube komplett einer Wärmebehandlung zur Werkstoffhärtung unterzogen wird. Dabei wird bevorzugt das Gewinde durch Gewindewalzen in den Schraubenschaft eingebracht.

Weiterbildungen und Ausgestaltungen der Erfindung sind in den Unteransprüchen angegeben. Ein Ausführungsbeispiel wird nachfolgend im Einzelnen beschrieben:
Die als Ausführungsbeispiel gewählte Kombischraube umfasst eine Schraube sowie eine unverlierbar auf dieser gehaltenen Scheibe, wobei die Schraube aus einer Stahllegierung 38B2 gemäß DIN EN 10263 hergestellt ist. Die Scheibe ist aus einer Stahllegierung C22 gemäß DIN EN 10083 hergestellt, mit einem Kohlenstoffgehalt von 0,21 Massen-%, einem Mangangehalt von 0,6 Massen-% sowie einem Chromgehalt von 0,2 Massen-%. Der Kohlenstoff-Äquivalentgehalt (CEV) liegt zwischen 0,25 und 0,37 Massen-%.

Zur Herstellung der Kombischraube wurde zunächst ein Schraubenrohling aus einer Stahllegierung 38B2 gemäß DIN EN 10263 und eine Scheibe aus einer Stahllegierung C22 gemäß DIN EN 10083 mit den vorgenannten Kohlenstoff-, Mangan- und Chromgehalten hergestellt. Dabei ist im Ausführungsbeispiel die Schraubenkopfunterseite sowie die dem Schraubenkopf entgegengerichtete Scheibenunterseite jeweils umlaufend mit Rippen versehen. Die Scheibe wurde auf den Schraubenrohling gesteckt und nachfolgend wurde in die Schraube ein Gewinde mittels Gewindewalzen eingebracht, wodurch die Scheibe unverlierbar auf der Schraube gehalten ist. Die so gebildete Kombischraube wurde einer Wärmebehandlung unterzogen und bei einer Temperatur von 450 °C angelassen. Dadurch, dass das Gewinde vor dem Härten in den Schraubenschaft eingewalzt worden ist, konnten höhere Prozessgeschwindigkeiten bei gleichzeitig höheren Standzeiten der Werkzeuge erzielt werden. Hierdurch ergab sich eine signifikante Kostenreduktion im Herstellungsprozess.

Die Scheibe der so hergestellten Kombischraube weist nach dem Anlassen eine Härte von 269 HV im äußeren Scheibenbereich, 266 HV im mittleren Scheibenbereich und 252 HV im inneren Scheibenbereich auf. Damit ist die Scheibe im Ausführungsbeispiel um mindestens 90 HV weicher als die Schraube, die eine Härte von 360 HV aufweist.

Es hat sich gezeigt, dass mit der erfindungsgemäßen Schraube und dem erfindungsgemäßen Herstellungsverfahren prozesssicher eine Scheibenhärte gewährleistet werden kann, die mindestens 40 HV weicher ist, als die Schraubenhärte.

## Patentansprüche

1. Kombi-Schraube, umfassend eine Schraube und eine unverlierbar an dieser gehaltene Scheibe, wobei die Unterkopffläche der Schraube zumindest bereichsweise mit Rippen versehen ist, wobei die Schraube aus einer Stahllegierung 38B2 gemäß DIN EN 10263-4:2002-02 und die Scheibe aus einer Stahllegierung C22 mit einen Kohlenstoffgehalt von 0,17 % bis 0,24 %, einem Siliziumgehalt von bis zu 0,40 %, einem Mangangehalt von 0,40 % bis 0,70 %, einen Phosphorgehalt von bis zu 0,045 %, einem Schwefelgehalt von bis zu 0,2 %, einem Chromgehalt von bis zu 0,40 %, einem Molybdän-Gehalt von bis zu 0,10 % und einem Summengehalt von Chrom, Molybdän und Nickel von bis zu 0,63 %, Rest Eisen hergestellt ist, **dadurch gekennzeichnet, dass** der Scheibenwerkstoff einen Kohlenstoffgehalt von 0,18 % bis 0,23 %, einen Mangangehalt von 0,5 % bis 0,7 % und einen Chromgehalt von 0,1 % bis 0,4 % aufweist, wobei die Scheibenhärte mindestens 40 HV weicher ist, als die Schraubenhärte.

2. Kombi-Schraube nach Anspruch 1, **dadurch gekennzeichnet, dass** der Scheibenwerkstoff einen Kohlenstoffgehalt von 0,19 % bis 0,23 %, einen Mangangehalt von 0,55 % bis 0,65 % und einen Chromgehalt von 0,15 % bis 0,25 % aufweist.

3. Kombi-Schraube nach einem der vorgenannten Ansprüche, **dadurch gekennzeichnet, dass** die Scheibe zumindest auf einer Seite zumindest bereichsweise mit Rippen versehen ist.

4. Verfahren zur Herstellung einer Kombischraube nach einem der vorgenannten Ansprüche, **dadurch gekennzeichnet, dass** zunächst ein Schraubenrohling und eine Scheibe hergestellt werden, die Scheibe auf den Schraubenrohling gesteckt wird und nachfolgend in die Schraube ein Gewinde eingebracht wird, wonach die so gebildete Kombischraube komplett einer Wärmebehandlung zur Werkstoffhärtung unterzogen wird.

5. Verfahren nach Anspruch 4 **dadurch gekennzeichnet, dass** das Gewinde durch Gewindewalzen in den Schraubenschaft eingebracht wird.

## Claims

1. Combination screw comprising a screw and a washer captively held thereon, wherein the under-head surface of the screw is at least partially provided with ribs, wherein the screw is manufactured from a steel alloy 38B2 according to DIN EN 10263-4:2002-02 and the washer is manufactured from a steel alloy C22 having a carbon content of 0.17% to 0.24%, a silicon content of up to 0.40%, a manganese content of 0.40% to 0.70%, a phosphorus content of up to 0.045%, a sulphur content of up to 0.2%, a chromium content of up to 0.40%, a molybdenum content of up to 0.10% and a total content of chromium, molybdenum and nickel of up to 0.63%, remainder iron, **characterised in that** the washer material has a carbon content of 0.18% to 0.23%, a manganese content of 0.5% to 0.7% and a chromium content of 0.1% to 0.4%, wherein the washer hardness is at least 40 HV softer than the screw hardness.

2. Combination screw according to claim 1, **characterised in that** the washer material has a carbon content of 0.19% to 0.23%, a manganese content of 0.55% to 0.65% and a chromium content of 0.15% to 0.25%.

3. Combination screw according to one of the previous claims, **characterised in that** the washer is at least partially provided with ribs on at least one side.

4. Method for producing a combination screw according to one of the previous claims, **characterised in that**, first, a screw blank and a washer are produced, the washer is mounted on the screw blank and the screw is subsequently provided with a thread, after which the combination screw thus formed is completely subjected to heat treatment for material hardening.

5. Method according to claim 4, **characterised in that** the thread is provided in the screw shaft by thread rolling.

## Revendications

1. Vis combinée comprenant une vis et une rondelle retenue contre elle de manière imperdable, sachant que la surface sous la tête de la vis est munie au moins localement de nervures, sachant que la vis est fabriquée en un alliage d'acier 38B2 selon DIN EN 10263-4:2002-02, et que la rondelle est fabriquée en un alliage d'acier C22 avec une teneur en carbone comprise entre 0,17 % et 0,24 %, une teneur en silicium pouvant atteindre 0,40 %, une teneur en manganèse comprise entre 0,40 % et 0,70 %, une teneur en phosphore pouvant atteindre 0,045 %, une teneur en soufre pouvant atteindre 0,2 %, une teneur en chrome pouvant atteindre 0,40 %, une teneur en molybdène pouvant atteindre 0,10 % et une teneur totale en chrome, molybdène et nickel pouvant atteindre 0,63 %, le reste étant du fer, **caractérisée en ce que** le matériau de la rondelle présente une teneur en carbone comprise entre 0,18 % et 0,23 %, une teneur en manganèse comprise entre 0,5 % et 0,7 % et une teneur en chrome comprise entre 0,1 % et 0,4 %, sachant que la dureté Vickers (HV) de la rondelle est inférieure d'au moins 40 HV à la dureté Vickers de la vis.

2. Vis combinée selon la revendication 1, **caractérisée en ce que** le matériau de la rondelle présente une teneur en carbone comprise entre 0,19 % et 0,23 %, une teneur en manganèse comprise entre 0,55 % et 0,65 %, et une teneur en chrome comprise entre 0,15 % et 0,25 %.

3. Vis combinée selon l'une des revendications précédentes, **caractérisée en ce que** la rondelle est munie de nervures au moins sur un côté, au moins localement.

4. Procédé de fabrication d'une vis combinée selon l'une des revendications précédentes, **caractérisé en ce que** sont d'abord fabriquées une vis brute et une rondelle, **en ce que** la rondelle est enfoncée sur la vis brute et qu'ensuite un filet est taillé dans la vis, sachant que la vis combinée ainsi formée est soumise toute entière à un traitement thermique visant à tremper le matériau.

5. Procédé selon la revendication 4, **caractérisé en ce que** le filet est taillé par laminage dans la tige de la vis.
